# EUROPEAN PATENT APPLICATION

(11) **EP 2 863 536 A1**
(43) Date of publication of application: **22.04.2015**
(21) Application number: 13826549.1
(22) Date of filing: 31.07.2013
(51) Int. Cl.: H02P 4/00

(54) **MOTION AND CONTROL SYSTEM**

(30) Priority: 31.07.2012 CN 201210269879
(71) Applicant: Schneider Toshiba Inverter Europe SAS, 27120 Pacy sur Eure (FR)
(72) Inventor: LIAN, Xiaofan, Pudong, Shanghai 201304 (CN)
(74) Representative: Manitz, Finsterwald & Partner GbR
(86) International application number: PCT/CN2013/080492
(87) International publication number: WO 2014/019509

(57) **Abstract**

A motion and control system, comprising: a current rectifier(220) for transforming an alternating current into a direct current; a smoothing circuit(230) for performing smoothing processing on the wave form of the direct current output by the current rectifier(220); a main power stage(241) and a standby power stage(242) which are connected between the smoothing circuit(230) and an electric motor in parallel; and a controller(210) which, under a normal working mode, drives the main power stage(241) to transform a direct current voltage from the smoothing circuit(230) into an alternating current voltage provided for the electric motor, and when it is determined that a fault of the main power stage(241) has occurred, drives the standby power stage(242) to transform the direct current voltage from the smoothing circuit(230) into the alternating current voltage provided for the electric motor. By comprising a standby power stage (242) in a motion and control device, the cost and size of the system are reduced.

## Description

### Field of Invention

The present invention relates to the field of electric motor control. Specifically, it relates to the redundant system of a motion and control system.

### Background Art

A motion and control device (also known as "frequency converter") is usually used for the control of the speed and positon of the electric motor in industry, especially, in the environment of high precision machining and energy saving.

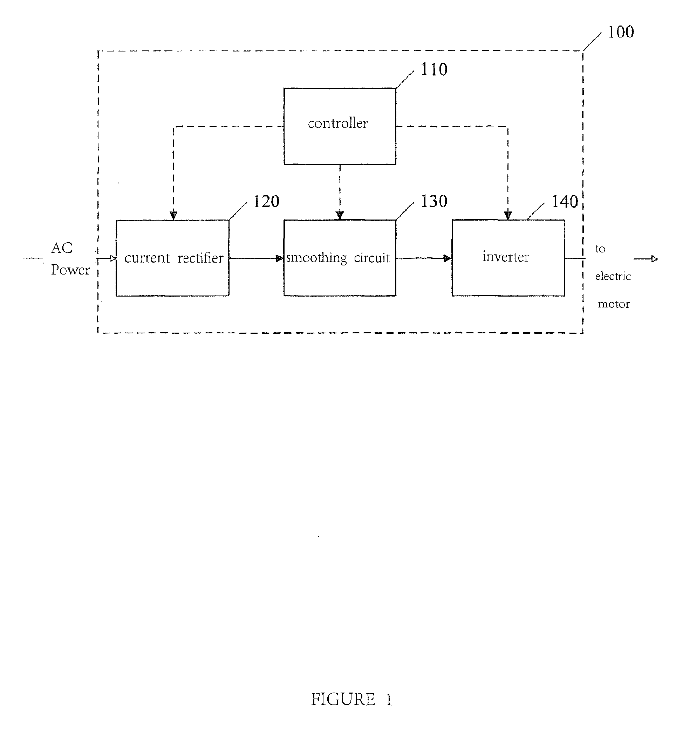

Fig. 1 is a block diagram of a regular motion and control device 100. With reference to Fig. 1, a motion and control device 100 comprises a controller 110, a current rectifier 120, a smoothing circuit 130 and an inverter140.

The current rectifier 120 is used for transforming an input alternating current power source into a direct current power source. The smoothing circuit 130 is used for performing smoothing processing on the wave form of the direct current. The inverter 140 is used for transforming the smoothed direct current into an alternating current to output to the electric motor. The controller 100 is used for controlling the operation of all parts of the motion and control device 100. For example, the controller 100 can form a pulse width modulation (PWM) signal to control the inverter 140 to produce a suitable output current.

Additionally, although not shown in the figures, the motion and control device 100 also includes other parts, for example, a pre-charging circuit, a braking unit, a temperature test unit, a man-machine interface and the likes, the structure of which is well known to one skilled in the art and it will not be described in detail herein.

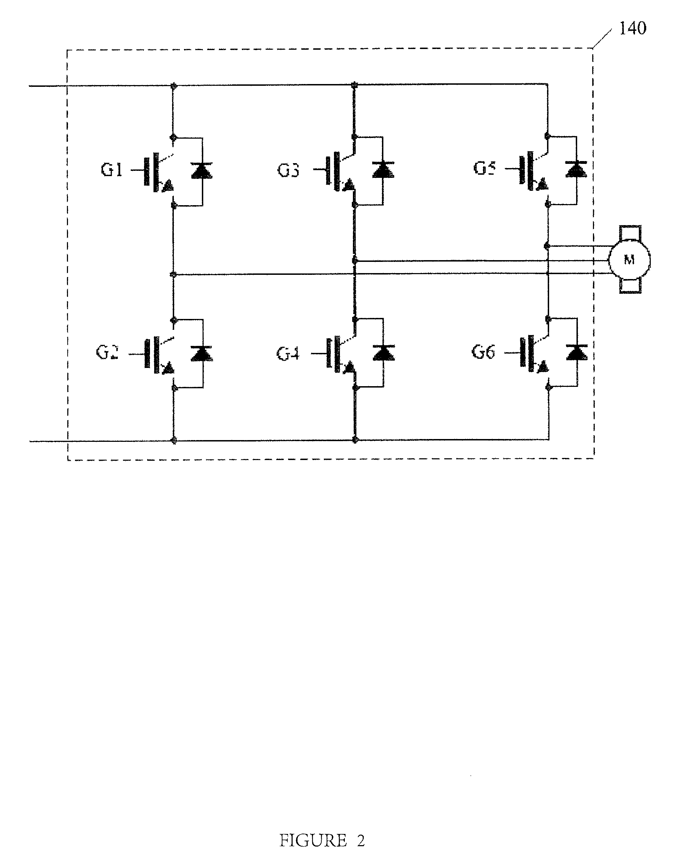

Fig 2 is a circuit diagram of the inverter 140 in the motion and control device 100. With reference to Fig 2, the inverter 140 comprises a power stage structure consisting of 6 insulated gate bipolar transistors (IGBT) G1∼G6, which is used for converting the direct current input into a three-phase alternating current supplied to the three-phase electric motor.

In order to ensure the reliability of the important device, there is the need to provide a redundant system for the motion and control device. A conventional redundant system is only constructed with 2 motion and control devices, that is, connect 2 motion and control devices between the AC power source and the electric motor, when one of the motion and control devices is damaged, the other device will work as a backup to ensure that the system is in a good operating condition.

However, there is a big problem in such a redundant system, and applying 2 motion and control devices in a cabinet will lead to a significant increase of the cost and size of the system.

### Summary of the Invention

For the defects of the prior motion and control system, the present invention provides a redundant system, which reduces the cost and size of the motion and control system.

According to one aspect of the invention, a motion and control system is provided, comprising: a current rectifier for transforming an alternating current into a direct current; a smoothing circuit for performing smoothing processing on the wave form of the direct current output by the current rectifier; a main power stage and a standby power stage which are connected between the smoothing circuit and an electric motor in parallel; and a controller which, under a normal working mode, drives the main power stage to transform a direct current voltage from the smoothing circuit into an alternating current voltage provided for the electric motor, and when it is determined that a fault of the main power stage has occurred, drives the standby power stage to transform the direct current voltage from the smoothing circuit into the alternating current voltage provided for the electric motor.

According to an embodiment of the invention, the motion and control system further comprises: an input switcher, which is connected between the smoothing circuit and the input end of the main power stage and standby power stage; and an output switcher, which is connected between the output end of the main power stage and the standby power stage and the electric motor, wherein, under a normal working mode, the input switcher and the output switcher are connected to the main power stage and are disconnected from the standby power stage, when it is determined that a fault of the main power stage has occurred, the controller controls the input switcher and the output switcher to connect to the standby power stage and disconnect from the main power stage.

According to an embodiment of the invention, when it is determined that a fault of the main power stage has occurred, the controller stops sending the driving signal to the main power stage, and sends the driving signal to the standby power stage after the standby power stage is connected.

According to an embodiment of the invention, when it is determined that a fault of the main power stage has occurred, the controller first controls the output switcher to switch to the output end of the standby power stage, and then controls the input switcher to switch to the input end of the standby power stage.

According to an embodiment of the invention, the standby power stage includes a pre-charging circuit and a voltage clamp circuit.

According to an embodiment of the invention, the input switcher and the output switcher include a switch.

According to an embodiment of the invention, the main power stage and the standby power stage include insulated gate bipolar transistor (IGBT) modules.

According to an embodiment of the invention, the main power stage will cut off the IGBT modules and send a signal of fault to the controller, when it is detected that the current in its IGBT modules is larger than a predetermined threshold.

According to an embodiment of the invention, the controller will reset the main power stage after having received a signal of fault, and drive the main power stage to work for a short time, if the signal of fault is received again, it is determined that there is a fault of the main power stage.

According to an embodiment of the invention, the electric motor is a three-phase AC electric motor.

The motion and control system of the invention, for the drawbacks of a redundant system including 2 motion and control devices, reduces the cost and size of the system by including a standby power stage in the motion and control device.

### Brief Description of the Drawings

With the following detailed description of the accompanying drawings and the exemplary embodiment, the present invention will be better understood. It should be clearly understood that, the exemplary embodiments are described only as descriptions and examples, and the invention is not limited to this. The spirits and scopes of the invention are limited by the specific content of the accompanying claims. A brief description of the drawings is described below, wherein:
Fig. 1 is a block diagram of the regular motion and control device;
Fig. 2 is a circuit diagram of the inverter in the regular motion and control device;
Fig. 3 is a block diagram of the motion and control system of an embodiment according to the present invention;
Fig. 4 is a block diagram of the motion and control system of an embodiment according to the present invention; and
Fig. 5 is a schematic diagram of the input switcher and output switcher in the motion and control system of an embodiment according to the present invention

### Description of Embodiments

Considering that the failure probability of the inverter of a motion and control device is higher and the cost of the IGBT power stage thereof makes up only a small part, compared with the whole device, the redundant design of the inner power stage of a single motion and control device is used in the present invention to realize the redundant system of the motion and control device, instead of adding a standby motion and control device.

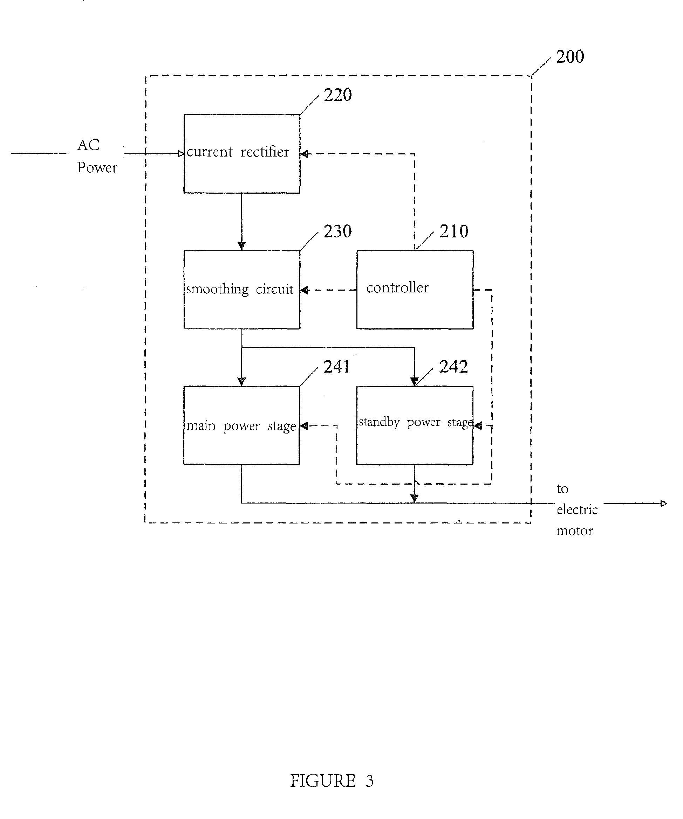

Fig. 3 is a block diagram of the motion and control system 200 of the embodiment according to the present invention. With reference to Fig.3, the motion and control system 200 includes a controller 210, a current rectifier 220, a smoothing circuit 230, a main power stage 241, and a standby power stage 242. The difference between the redundant system of the motion and control system 200 and that of the traditional motion and control system (composed of 2 motion and control devices 100 of Fir.1) is that, based on one motion and control device, 2 power stages are used to replace the frequency converter (comprising one power stage). Therefore, function and structure of the current rectifier 220 and the smoothing circuit 230 of the motion and control system 200 are the same as that of the current rectifier 120 and the smoothing circuit 130 of the motion and control device 100, and the motion and control system 200 can also include a pre-charging circuit, a braking unit, a temperature test unit, a man-machine interface and the likes, which will not be described in detail herein.

Under a normal working mode, the controller 210 drives the main power stage 241 to transform a direct current voltage from the smoothing circuit 230 into an alternating current provided for the electric motor, and when it is determined that a fault of the main power stage has occurred, the controller 210 drives the standby power stage 242 to work as a replacement of the main power stage 241.

The structure of the main power stage 241 and the standby power stage 242 is the same as the power stage in the inverter 140 of Fig. 2, consisting of 6 IGBT as IGBT modules, to transform the input direct current into the three-phase alternating current supplied to a three-phase electric motor.

The main power stage 241 test the current in its IGBT modules, and cuts off the IGBT modules and sends a signal of fault to the controller 210, when it is detected that the current is larger than a predetermined safe threshold.

According to one embodiment, since the overcurrent may be caused by interference instead of the fault of the main power stage, the controller 210 will not determine that a fault of the main power stage 241 has occurred instantly, but will reset the main power stage 241 and drives it to work for a short time (i.e. 10 microseconds), if the signal of fault is received again, it is determined that a fault of the main power stage 241 has occurred.

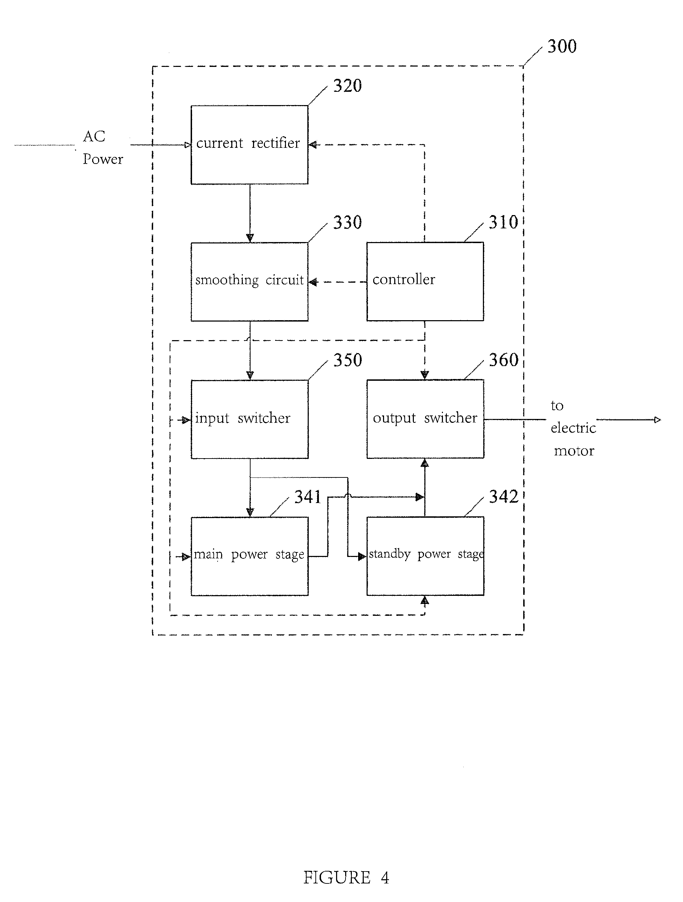

Fig. 4 is a block diagram of the motion and control system 300 of the embodiment according to the invention. Referring to Fig. 4, the motion and control system 300 includes a controller 310, a current rectifier 320, a smoothing circuit 330, a main power stage 341, a standby power stage 342, an input switcher 350, and an output switcher 360. Based on the motion and control system 200 of Fig. 3, the input switcher 350 and the output switcher 360 are added to the motion and control system 300 of Fig. 4.

The input switcher 350 is connected between the smoothing circuit 330 and the input end of the main power stage 341 and the standby power stage 342, the output switcher 360 is connected between the output end of the main power stage 341 and the standby power stage 342 and the electric motor.

Under a normal working mode, the input switcher 350 and the output switcher 360 are connected to the main power stage 341, and are disconnected from the standby power stage 341. If a fault of the main power stage has occurred, the controller 310 controls the input switcher 350 and the output switcher 36o to connect to the standby power stage 342 and disconnects the main power stage 341.

According to one embodiment, when it is determined that a fault of the main power stage 341 has occurred, the controller 310 first stops sending the driving signal to the main power stage 341 and cuts off the main power stage 341, and then connects the standby power stage 342, then sends the driving signal to the standby power stage 342.

According to one embodiment, when it is determined that a fault of the main power stage 341 has occurred, controller 310 first controls the output switcher 360 to switch to the output end of the standby power stage 342, then controls the input switcher 350 to switch to the input end of the standby power stage 342.

According to one embodiment, in order to prevent the generation of interference voltage spikes during switching, the standby power stage 342 can include a pre-charging circuit and a voltage clamp circuit (not shown).

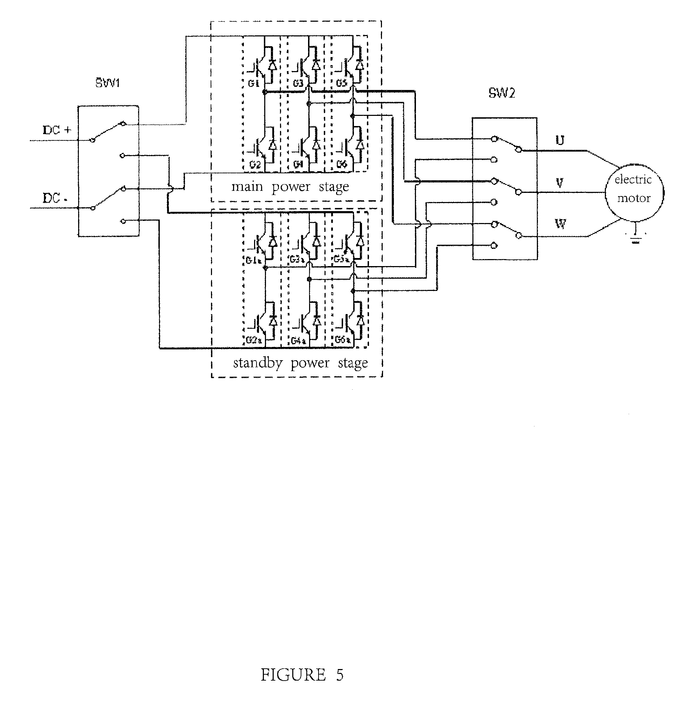

According to one embodiment, as shown in Fig. 5, the input switcher 350 includes a switch SW1; the output switcher 360 includes a switch SW2.

The motion and control system of the invention, for the drawbacks of a redundant system including 2 motion and control devices of the prior art, reduces the cost and size of the system by including a standby power stage in the motion and control device.

Although the exemplary embodiments of the present invention have been illustrated and described, but the one skilled in the art can understand that, with the advancement of technology, various changes and modifications can be made, and they can be replaced by the equivalents of their elements without departing from the real scope of the invention.

## Claims

1. A motion and control system, comprising:
- a current rectifier for transforming an alternating current into a direct current;
- a smoothing circuit for performing smoothing processing on the wave form of the direct current output by the current rectifier;
- a main power stage and a standby power stage which are connected between the smoothing circuit and an electric motor in parallel; and
a controller which, under a normal working mode, drives the main power stage to transform a direct current voltage from the smoothing circuit into an alternating current voltage provided for the electric motor, and when it is determined that a fault of the main power stage has occurred, drives the standby power stage to transform the direct current voltage from the smoothing circuit into the alternating current voltage provided for the electric motor.

2. The motion and control system according to claim 1, further includes:
- an input switcher, which is connected between the smoothing circuit and the input end of the main power stage and standby power stage; and
- an output switcher, which is connected between the output end of the main power stage and the standby power stage and the electric motor,
wherein, under a normal working mode, the input switcher and the output switcher are connected to the main power stage and are disconnected from the standby power stage, when it is determined that a fault of the main power stage has occurred, the controller controls the input switcher and the output switcher to connect to the standby power stage and disconnect from the main power stage.

3. The motion and control system according to claim 2, wherein, when it is determined that a fault of the main power stage has occurred, the controller stops sending the driving signal to the main power stage, and sends the driving signal to the standby power stage after the standby power stage is connected.

4. The motion and control system according to claim 2, wherein, when it is determined that a fault of the main power stage has occurred, the controller first controls the output switcher to switch to the output end of the standby power stage, and then controls the input switcher to switch to the input end of the standby power stage.

5. The motion and control system according to claim 2, wherein the standby power stage includes a pre-charging circuit and a voltage clamp circuit.

6. The motion and control system according to claim 2, wherein the input switcher and the output switcher include a switch.

7. The motion and control system according to claim 1, wherein the main power stage and the standby power stage include insulated gate bipolar transistor (IGBT) modules.

8. The motion and control system according to claim 7, wherein the main power stage will cut off the IGBT modules and send a signal of fault to the controller, when it is detected that the current in its IGBT modules is larger than a predetermined threshold.

9. The motion and control system according to claim 8, wherein the controller will reset the main power stage after having received a signal of fault, and drive the main power stage to work for a short time, if the signal of fault is received again, it is determined that there is a fault of the main power stage.

10. The motion and control system according to claim 1, wherein the electric motor is a three-phase AC electric motor.
